# EUROPÄISCHE PATENTSCHRIFT

(11) **EP 0 570 828 B1**
(45) Veröffentlichungstag und Bekanntmachung des Hinweises auf die Patenterteilung: **05.08.1998**
(21) Anmeldenummer: 93107726.7
(22) Anmeldetag: 12.05.1993
(51) Int. Cl.: G07F 7/08, G07F 7/02, G07F 7/10

(54) **Verfahren und Datenträgeranordnung zur Echtheitserkennung von Speicherchips**
Method and data carrier assembly for validating memory chips
Méthode et dispositif de support de données pour l'authentification de puces de mémoire

(30) Priorität: 31.03.1993 DE 4310537; 20.05.1992 DE 4216713; 19.01.1993 DE 4301259
(43) Veröffentlichungstag der Anmeldung: 24.11.1993
(73) Patentinhaber: SIEMENS AKTIENGESELLSCHAFT, 80333 München (DE)
(72) Erfinder: Schrenk, Hartmut, Dr.rer.nat., W-8013 Haar (DE)

(56) Entgegenhaltungen:
- EP-A- 0 268 106
- EP-A- 0 321 727
- EP-A- 0 380 377
- EP-A- 0 443 915

## Beschreibung

Die Erfindung betrifft ein Verfahren nach dem Oberbegriff des Patentanspruchs 1 sowie eine Datenträgeranordnung nach dem Oberbegriff des Patentanspruchs 14 zur Durchführung des Verfahrens.

Zur bargeldlosen Bezahlung von Waren oder zum Abrechnen von Dienstleistungen und ähnlichem sind datengesteuerte Zahlungssysteme in Form von Datenaustauschsystemen bekannt, die beispielsweise in der EP-0 321 728 A2 beschrieben worden sind.

Zur Echtheitserkennung von Speicherchips, insbesondere bei Verwendung in tragbaren Datenträgeranordnungen von Datenaustauschsystemen, kann zwischen Datenaustausch- und Kontrollbetrieb umgeschaltet werden, wobei insbesondere die Signallaufzeit der Kontrolldaten als Erkennungsmerkmal dient. Gemäß diesem Stand der Technik ist als Erkennungsmerkmal eines autorisierten Kartenchips ein analog realisierter Datenverarbeitungs-Schaltungsteil notwendig, dessen kurze Reaktionszeit über eine programmgesteuerte Simulationsschaltung schwer nachvollziehbar ist. Auch eine Hardwaresimulation ist durch ein derartiges Echtheitsmerkmal erheblich erschwert, kann aber beim heutigen Stand der Technik nicht ausgeschlossen werden.

Es sind mittlerweile eine Vielzahl von Datenträgeranordnungen bekannt, die eine begrenzte Anzahl von Werteinheiten enthalten, welche sich beim Gebrauch dieser Chipkarten ständig verringern bis ein Minimalwert erreicht ist, - im allgemeinen der Wert 0 - bei dem die Chipkarte nicht mehr brauchbar ist. Solche Chipkarten finden beispielsweise als Telefonkarten heute vielerorts Verwendung. Auf diesen Telefonkarten befindet sich eine beschränkte Anzahl von Werteinheiten, beispielsweise für 12 DM oder 60 DM. Telefoniert der Chipkartenbenutzer mit einer solchen Chipkarte, so verringert sich die zur Verfügung stehende Anzahl von Werteinheiten, abhängig davon, wie oft und wie lange der Chipkartenbenutzer telefoniert.

Chipkarten zum Registrieren von Werteinheiten repräsentieren also einen Geldwert, der zu Mißbrauchsversuchen und Fälschungen führen kann. So kann es vorkommen, daß über ein geeignetes Programm mit einem Rechner oder durch Erstellung einer Platine mittels verfügbarer elektronischer Bauelemente solche Karten nachgebildet werden.

Es ist daher notwendig, solche tragbaren Datenträgeranordnungen, insbesondere Chipkarten, einer Echtheitsprüfung zu unterziehen, bevor die Karte benutzt werden kann. Ist die Chipkarte als echt erkannt, so ist mit ihr ein weiterer Datenaustausch möglich. Wird die "Chipkarte" dagegen als falsch erkannt, so führt dies zum Abbruch eines weiteren Datenaustausches. Echtheitsprüfungen von solchen Chipkarten werden normalerweise mit einem sogenannten Challenge- und Response-Verfahren durchgeführt. Die Karte weist dabei ihre Echtheit durch charakteristische Veränderung einer von einer Datenein/ausgabeeinrichtung gesendeten Kontrolldatensendung ("Challenge") zur Datenträgeranordnung nach, die von der tragbaren Datenträgeranordnung - hier also der Chipkarte - als Kontrolldatensendung ("Response") wieder an die Datenein/ausgabeeinrichtung zurückgesandt wird. Die Abhängigkeit der Datensendung ("Response") von geheimen, kartenspezifischen Schlüsseln schützt das System kryptologisch gegen Nachbildungen. Durch eine in der Datenein-/aus-gabeeinrichtung vorgesehene Schlüsselverwaltung und Geheimhaltung des Schlüssels kann hoher Schutz gegen Nachbildung der Chipkarte erreicht werden. Solche Verfahren, in denen die Echtheit einer Chipkarte auch durch eine Fähigkeit komplexer Signalverarbeitung nachgewiesen wird, können sich gegen eventuelle Nachbildungen außerdem dadurch schützen, daß einmal
- die Prozedur zur Erzeugung der Datensendung ("Response") von der tragbaren Datenträgeranordnung zur Datenein/ausgabeeinrichtung geheimgehalten werden kann, und daß außerdem
- die Nachbildung von Prozedur und Rechenwerk mit standardmäßigen elektronischen Bauelementen zumindest Schwierigkeiten macht.

Das größte Risiko einer mißbräuchlichen Analyse von logischen Chipfunktionen auf einer Datenträgeranordnung besteht von der Methodik und vom Aufwand her gesehen darin, daß durch mehrmaliges Ausprobieren von Dateneingaben in die integrierte Schaltung der Datenträgeranordnung und Prüfung der daraufhin ausgegebenen Datensendungen ("Response") die geheimzuhaltenden Elemente der Chiplogik herausgefunden werden können.

Eine Möglichkeit, dies nur in begrenzten Bereichen zuzulassen, besteht darin, daß in die integrierte Schaltungsanordnung der tragbaren Datenträgeranordnung, also in das Kartenchip, ein Fehlerzähler eingebaut wird, und nach Erfassen einer bestimmten Anzahl von Fehlern eine Datensendung von der Trägeranordnung unterbunden wird. Der Einbau eines solchen Fehlerzählers in die Datenträgeranordnung setzt voraus, daß dieser Zähler auch manipuliersicher zurückgesetzt werden kann. Diese Möglichkeit ist in einfachen Chips ohne Kryptologie nicht gegeben.

Der Erfindung liegt daher die Aufgabe zugrunde, ein Verfahren und eine Datenträgeranordnung zur Durchführung dieses Verfahrens anzugeben, das einen wirksamen Schutz vor mehrmaligen Mißbräuchen bietet und in einfacher Weise zu realisieren ist.

Diese Aufgabe wird für ein Verfahren durch die Merkmale des Anspruches 1 und für eine Datenträgeranordnung zur Durchführung dieses Verfahrens durch die Merkmale des Anspruches 14 gelöst.

Weiterbildungen und zweckmäßige Ausführungen der Erfindung sind Gegenstand der auf diese Ansprüche zurückbezogenen Unteransprüche.

Die Erfindung wird im folgenden anhand von drei Figuren näher erläutert. Es zeigen:
- FIG 1: ein Blockschaltbild einer erfindungsgemäßen Datenträgeranordnung mit einer Datenein-/ausgabeeinrichtung,
- FIG 2: eine Blockdarstellung des zeitlichen Ablaufs einer erfindungsgemäßen Echtheitsprüfung, und
- FIG 3: ein Ablaufdiagramm des erfindungsgemäßen Verfahrens.

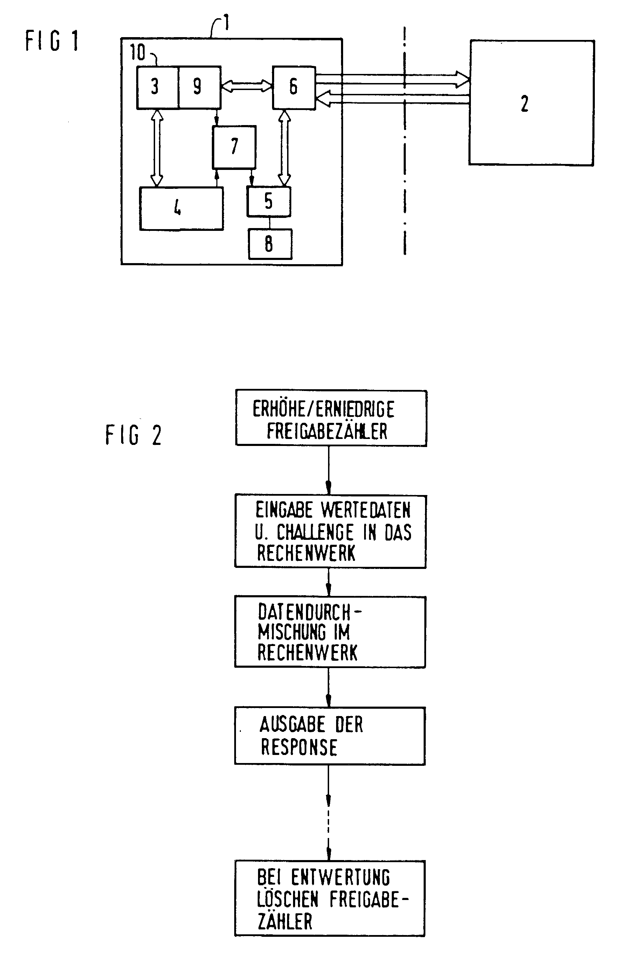

In FIG 1 ist das Blockschaltbild einer erfindungsgemäßen Datenträgeranordnung zusammen mit einer Datenein-/ausgabeeinrichtung dargestellt. Mit dem Bezugszeichen 1 ist in diesem Ausführungsbeispiel eine tragbare Datenträgeranordnung, beispielsweise eine Telefonchipkarte, bezeichnet, auf eine Steuerlogik 10, die mit einem nichtflüchtigen Speicher 4 (ein EPROM oder E²PROM-Speicher) verbunden ist, vorgesehen ist. Die Steuerlogik 10 enthält eine Zähllogik 3, die in Verbindung mit dem nichtflüchtigen Speicher 4 sicherstellt, daß die Anzahl der Zähleinheiten auf einen vorgegebenen Wert begrenzt ist. Die Zähllogik 3 sowie deren Daten, Steuer- und Adressierleitungen sind als integrierte Schaltungsanordnung auf der Karte in geeigneter Weise untergebracht. Des weiteren enthält die Steuerlogik 10 einen Freigabezähler 9, der mit einer Koppelstufe 7 verbunden ist. Der Zähler 9 ist z.B. als EE-Prom nichtflüchtig ausgebildet, dessen Speicherzellen ebenfalls Teil des nichtflüchtigen speichers 4 sein können. Der nichtflüchtige Speicher 4 enthält erfindungsgemäß zumindest einen Teilbereich zum Speichern einer aktuellen Anzahl von Werteinheiten der Datenträgeranordnung. Ist die tragbare Datenträgeranordnung 1 z. B. eine Telefonchipkarte mit einem Wert von 60 DM, so können im nichtflüchtigen Speicher z. B. 6000 Werteinheiten zu je einem Pfennig abgespeichert werden. Mit jedem Telefoniervorgang vermindert sich erfindungsgemäß bei Verwendung dieser Telefonchipkarte die Anzahl der noch zur Verfügung stehenden Werteinheiten im nichtflüchtigen Speicher. Es ist dabei anzumerken, daß der nichtflüchtige Speicher 4 vorteilhafterweise nicht rücksetzbar ausgebildet ist.

Die tragbare Datentrageranordnung 1 steht über eine Datenaustauschverbindung 6 mit der Datenein-/ausgabeeinrichtung 2 bei Benutzung der Datenträgeranordnung 1 in Verbindung. Im Falle von Telefonchipkarten wird diese Verbindung hergestellt, sobald diese Telefonchipkarte in einen die Datenein-/ausgabeeinrichtung 2 enthaltenen Telefonapparat eingeführt und als echt erkannt wird. Die Datenaustauschverbindung ist ebenfalls mit der Steuerlogik 10 verbunden.

Um zu gewährleisten, daß nur mit einer "echten", d. h. nicht manipulierten oder nachgebildeten Datenträgeranordnung 1 ein Datenaustausch zur Datenein-/ausgabeeinrichtung 2 erfolgt, werden nach Erhöhung des Zählerstandes des Freigabezählers 9 über einen Datenaustausch zwischen der Datenträgeranordnung 1 und der Datenein-/ausgabeeinrichtung 2 Kontrolldaten zur Echtheitserkennung aus der Datenträgeranordnung 1 ausgesendet bzw. in diese eingeschrieben.

Die vom Datenträger als Echtheitsmerkmal ausgegebenen Daten werden über ein Rechenwerk 5 erzeugt. Über eine Koppelstufe 7 wird sichergestellt, daß die gesamte Prozedur zur Echtheitsprüfung nur beginnt, nachdem der Freigabezähler 9 erhöht wurde und sein Zählbereich innerhalb eines vorbestimmten Bereiches liegt.

Das Rücksetzen des Freigabezählers 9 erfolgt mit dem Entwertungsvorgang. In einer Weiterbildung der Erfindung kann das Rücksetzen des Freigabezählers erst nach Entwertung einer Mindestsumme erfolgen, um so die Anzahl der Versuche, den Echtheitsalgorythmus zu analysieren, einzuschränken. Da im Werteinheitenspeicher sowohl Werteinheiten geschrieben als auch nach Schuben eines höherwertigen Bereiches wieder gelöscht werden kann, läßt sich das Rücksetzen des Freigabe zählers sowohl an einen Schreib- als auch an einen Löschvorgang am Werteinheitenspeicher binden. Wird die Anzahl von Versuchen den Echtheitsalgorythmus zu simulieren/analysieren fehlerhafterweise so hoch, daß der Fehlerzähler 9 überläuft oder einen vorbestimmten Wert erreicht, so wird der weitere Vorgang der Echtheitserkennung blockiert. Um einen weiteren Versucht unternehmen zu können, muß der Betrüger zuerst die Karte um den jeweiligen Betrag entwerten um so den Fehlerzähler 9, der als EE-PROM ausgebildet ist, wieder zurückzusetzen. Ist die Karte vollständig entwertet, so ist kein weiterer Analyseversuch möglich.

FIG 2 zeigt als Blockschaltbild die zeitliche Reihenfolge der zu einer erfindungsgemäßen Echtheitsprüfung erforderlichen Schritte. Folgende Schritte werden erfindungsgemäß nacheinander ausgeführt: ein Zählvorgang, Eingabe von Wertedaten und einer "Challenge" in das Rechenwerk, Datendurchmischung im Rechenwerk und Ausgabe einer "Response", Rücksetzen des Zählers bei Entwertung.

In einer erfindungsgemäßen Ausbildung weist das Rechenwerk 5 eine rückgekoppelte Schieberegistereinrichtung auf, die zu Beginn eines Rechenvorganges mit Daten aus nichtflüchtigen Speicher 4 einschließlich des vorher geänderten Werteinheitenspeichers und mit weiteren Daten geladen wird, die von der Datenein-/ausgabevorrichtung als "Challenge" gesendet werden. Nach einer Phase der Datendurchmischung im Rechenwerk 5 wird das Ergebnis der Datendurchmischung als "Response" an die Datenein-/ausgabevorrichtung zurückgeschicht und dort auf ihre Echtheit überprüft.

In einer Weiterbildung der Erfindung wird die Response über ein nichtlineares Auskoppelnetzwerk in der Weise gegenüber den Eingabedaten ins Rechenwerk 5 geändert, daß der Zusammenhang zwischen Ein- und Ausgabe noch schwerer zu erkennen ist.

Dieses Rechenwerk 5 wird vorzugsweise als integrierte Schaltung ausgeführt und über eine Fotomaskenanordnung so verschaltet, daß die elektrischen Leitungsverbindungen optisch nicht sichtbar sind, indem diese durch Dotierungsprozesse hergestellt werden. Versieht man diese integrierte Schaltung mit zusätzlichen Schaltungselementen, die für die eigentliche Realisierung der Elektronik in der erfindungsgemäßen Datenträgeranordnung an sich nicht notwendig sind, so wird eine Schaltungsanalyse durch Unbefugte weiter erschwert. Es besteht ebenfalls die Möglichkeit, das erwähnte digitale Rechenwerk in der integrierten Schaltung mit Schichten aus Metall- und/Silizium zu schützen, um eine optische Analyse und eine Messung elektrischer Potentiale zu erschweren.

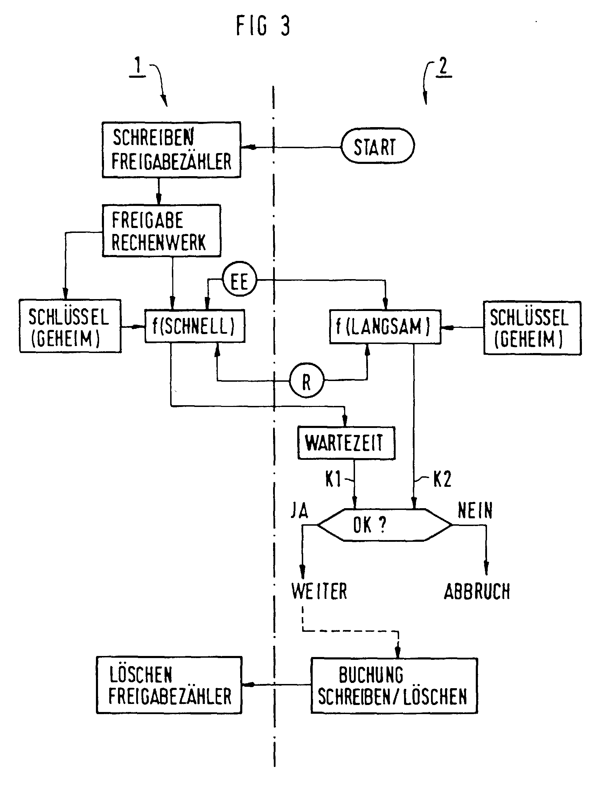

Das erfindungsgemäße Verfahren zur Echtheitserkennung einer derartigen Datenträgeranordnung 1 wird anhand einer Betrachtung von FIG 3 deutlich. FIG 3 zeigt einen prinzipiellen Ablauf des erfindungsgemäßen Verfahrens zur Echtheitserkennung der in FIG 1 dargestellten Datenträgeranordnung 1.

Das erfindungsgemäße Verfahren sieht vor, daß zur Echtheitserkennung einer mit einer begrenzten Anzahl von Werteinheiten ausgestatteten Datenträgeranordnung ein Datenaustausch zwischen der Datenein-/ausgabeeinrichtung erst freigegeben wird, nachdem der Freigabezähler in der Datenträgeranordnung geschrieben worden ist.

Der Freigabezähler wird erst auf Anforderung der Datenein-/ausgabeeinrichtung zur Buchung, d.h. zum Entwerten der Werteinheiten gelöscht.

Geht man beispielsweise von einer Telefonkarte im Wert von 60 DM aus, so befinden sich 6000 Werteinheiten zu je 1 Pf auf einer noch unverbrauchten Telefonkarte. Mit jeder Abbuchung, die bekanntlich derzeit ca. 30 Pf beträgt, wird diese Anzahl von Werteinheiten vermindert. Damit sind lediglich ca. 200 x Anzahl der Fehlerzählerstufen Versuche möglich, um Informationen für eine Nachbildung der Datenträgeranordnung zu erhalten. Erfindungsgemäß kann jedoch auch vorgesehen werden, daß der Fehlerzähler erst nach Entwerten von mehr als einer Gebühreneinheit gelöscht wird. Hierdurch reduziert sich die mögliche Anzahl der oben erwähnten Versuche zur Nachbildung der Datenträgeranordnung.

In einer bevorzugten Weiterbildung des erfindungsgemäßen Verfahrens ist es vorgesehen, daß die aktuelle Anzahl der noch nicht verbrauchten Werteinheiten als Maßgabe zur Erzeugung einer Datensendung ("Response") von der Datenträgeranordnung 1 zur Datenein-/ausgabeeinrichtung 2 dient. Durch eine derartige Maßnahme ändert sich der Informationsinhalt der Datensendung von der Datenträgeranordnung 1 zur Datenein/ausgabeeinrichtung 2 mit jeder Versuchsreihe, da gleichzeitig sich die Anzahl der noch nicht verbrauchten Werteinheiten erfindungsgemäß verringert. Damit ist es einem unbefugten Nachahmer erschwert, Rückschlüsse auf die Prozedur zur "Erzeugung" der Datensendung zu ziehen. Zweckmäßigerweise wird hierzu der Informationsinhalt der Datensendung ("Response") von der Datenträgeranordnung 1 zur Datenein/ausgabeeinrichtung 2 mit der Ändung der aktuellen Anzahl der Werteinheiten ebenfalls geändert. Eine elektrische Analyse der Echtheitsmerkmale wird dadurch erschwert. Das in der Datenträgeranordnung vorgesehene digitale Rechenwerk erzeugt nämlich somit für einen externen Betrachter die Datensendung ("Response") auf nicht vorhersehbare, scheinbar zufällige Weise. Damit sind Rückschlüsse auf die Wirkungsweise des Rechenwerks erschwert, was gewollt ist.

Durch das erfindungsgemäße Verfahren ist gewährleistet, daß im Falle von systematischen Analyseversuchen durch Ausprobieren fortlaufend Werteinheiten verbraucht werden. Die Anzahl möglicher Analyseversuche an beispielsweise gekauften Telefonchipkarten ist damit nur eingeschränkt möglich. Darüber hinaus ist sichergestellt, daß - sofern der jeweilige Restwert der Telefonchipkarte als Maßgabe zur Erzeugung einer Datensendung ("Response") verwendet wird - , sich der Informationsinhalt der Datensendung von Versuch zu Versuch ändert, auch wenn eine Datensendung von der Datenein/ausgabeeinrichtung zur Datenträgeranordnung unverändert eingegeben wird. Eine Rückrechnung der internen Chiplogik durch Vergleich von Datenein- und ausgaben ist daher erschwert.

Verbessert wird dieses Datenaustauschsystem noch dadurch, daß die Datenein-/ausgabeeinrichtung 2 ihre Kontrolldaten ("Challenge") ebenfalls auf zufällige Art und Weise erzeugt.

Weiter verbessert kann das erfindungsgemäße Verfahren dadurch werden, daß eine Datensendung ("Response") der Datenträgeranordnung zur Datenein-/ausgabeeinheit nur dann beginnt, nachdem die Datenein-/ausgabeeinrichtung eine vorgegebene Anzahl von Taktimpulsen zur tragbaren Datenträgeranordnung gesendet hat. Es ist auch möglich, daß diese Datensendung auf eine vorgegebene Anzahl von Takten der Datenein-/ausgabeeinrichtung begrenzt wird. Im übrigen kann diese Datensendung erst nach Ablauf einer vorgegebenen Anzahl von Takten gesendet werden, wobei diese Anzahl von Takten von der Datenein-/ausgabeeinheit beeinflußbar ist. Es kann aber auch jedes Responsebit mit einem eigenen Rechenlauf sofort gesendet werden.

Eine systematische Datendurchmischung der Kontrolldaten mit für die eigentliche Echtheitserkennung unnötigen Daten erschwert ein Erkennen der zur eigentlichen Echtheitserkennung notwendigen Kontrolldaten. Eine Vortäuschung solcher zusätzlicher, aber an und für sich nicht notwendiger Daten macht eine elektrische Analyse noch undurchsichtiger. Diese zusätzlichen Daten können beispielsweise vom Inhalt des nicht flüchtigen Speichers und/oder vom Zustand des digitalen Rechenwerkes abhängen.

Im übrigen ist es auch möglich, daß in der Datenein-/ausgabeeinrichtung vorgesehen sind, Vergleichswerte zur Information der von der Datenträgeranordnung gesendeten Datensendung ("Response") zu berechnen und daß durch diese Mittel eine langsamere Berechnung in der tragbaren Datenträgeranordnung ermöglicht ist. Um eine eventuelle Nachbildung einer Chipkarte erkennen zu können, muß die Übertragung der "Response" zur Datenein-/ausgabevorrichtung bereits bei Fertigstellung der "Response" stattfinden. Die "Response" wird dann in der Datenein-/ausgabevorrichtung bis zum Datenvergleich zwischengespeichert. Um als echt zu erscheinen, müßte eine Fälschung also ebenso schnell rechnen können wie eine echte Karte.

In FIG 3 ist links mit dem Bezugszeichen 1 die Datenträgeranordnung und rechts mit dem Bezugszeichen 2 die Datenein-/ausgabeeinrichtung bezeichnet. Nachdem eine Datenverbindung zwischen Datenträgeranordnung 1 und Datenein-/ausgabeeinrichtung 2 hergestellt ist, beginnt in einem Schritt "Start" das Verfahren zur Echtheitserkennung der Datenträgeranordnung 1 mit dem Schreiben des Freigabezählers. Dieser kann entweder vom bisherigen Wert um 1 weiter hoch gezählt oder erniedrigt werden, bis er einen vorbestimmten Wert (z.B. gleich 0, oder maximaler Zählwert) erreicht. Abhängig von mindestens einer in der Datenein-/ausgabeeinrichtung 2 gespeicherten Zufallsinformation R als auch einer im nicht flüchtigen Speicher gespeicherten Information EE einschließlich des geänderten Wertezählers des geänderten Freigabezählers und eines geheimen Schlüssels werden dann die Kontrolldaten in der Datenträgeranordnung in der Regel schneller berechnet als in der Datenein-/ausgabeeinrichtung 2. Die bei dieser Berechnung in der Datenträgeranordnung erzeugten Kontrolldaten sind in FIG 3 mit K1 und die in der Datenein-/ausgabeeinrichtung 2 erzeugten Kontrolldaten mit K2 bezeichnet. Stimmen K1 und K2 überein, so ist die Datenträgeranordnung als echt erkannt worden und ein weiterer Datenaustausch wird ermöglicht. Stimmen dagegen K1 und K2 nicht überein, so führt dies zum Abbruch der Datenverbindung zwischen der Datenein-/ausgabeeinrichtung 2 und der Datenträgeranordnung 1. Daraufhin wird der nichtflüchtige Speicher, z. B. über seine Adressen 64 bis 103, abgefragt, ob noch nicht verbrauchte Freigabe-Zähleinheiten oder Werteinheiten zum Rücksetzen des Freigabezählers zur Verfügung stehen. Ist dies nicht der Fall, so führt dies sofort zum Abbruch der Verbindung Datenaustausches. Stehen dagegen noch -nicht verbrauchte Werteinheiten zur Verfügung, so wird nach einem Entwertungsvorgang der Freigabezahler zurückgesetzt. In FIG 3 ist zusätzlich noch dargestellt, daß das zur Verfügungstellen der Kontrolldaten K1 durch eine Wartezeit verzögert erfolgen kann.

## Patentansprüche

1. Verfahren zur Echtheitserkennung einer zu einem Datenaustauschsystem gehörenden und mit einer begrenzten Anzahl von Werteinheiten ausgestatteten Datenträgeranordnung (1), die eine einen nichtflüchtigen Speicher (4) zum Speichern einer aktuellen Anzahl von Werteinheiten der Datenträgeranordnung (1) und dessen Steuer- und Adressierschaltung bildende integrierte Schaltung aufweist, wobei bei dem Datenaustauschsystem mit einer Datenein-/ausgabeeinrichtung (2) Daten zur Echtheitserkennung aus der Datenträgeranordnung (1) austauschbar sind,
**dadurch gekennzeichnet,**
daß ein Datenaustausch zur Echtheitserkennung erst freigegeben wird, nachdem ein Freigabezähler erhöht oder erniedrigt wurde, und daß der Freigabezähler nur bei Verringerung der Werteinheiten gelöscht wird.

2. Verfahren nach Anspruch 1,
**dadurch gekennzeichnet**,
daß die aktuelle Anzahl der noch nicht verbrauchten Einheiten des Freigabezählers als Maßgabe zur Erzeugung einer Datensendung ("Response") von der Datenträgeranordnung (1) zur Datenein-/ausgabeeinrichtung (2) vorgesehen ist.

3. Verfahren nach Anspruch 2,
**dadurch gekennzeichnet,**
daß sich ein Informationsinhalt der Datensendung mit einer Änderung der aktuellen Anzahl der Werteinheiten und der Zahleinheiten im Freigabezähler ebenfalls ändert.

4. Verfahren nach einem der Ansprüche 1 bis 3,
**dadurch gekennzeichnet,**
daß eine Datensendung ("Response") der Datenträgeranordnung (1) zur Datenein-/ausgabeeinheit (2) nur dann erfolgt, nachdem die Datenein-/ausgabeeinrichtung (2) eine vorgegebene Anzahl von Taktimpulsen zur tragbaren Datenträgeranordnung (1) gesendet hat.

5. Verfahren nach einem der Ansprüche 1 bis 4,
**dadurch gekennzeichnet,**
daß die Datensendung ("Response") von der Datenträgeranordnung (1) zur Datenein-/ausgabeeinheit (2) auf eine vorgegebene Anzahl von Takten der Datenein-/ausgabeeinrichtung (2) begrenzt wird.

6. Verfahren nach einem der Ansprüche 1 bis 4,
**dadurch gekennzeichnet,** daß jedes Bit der Response auf eine vorgegebene Anzahl von Takten der Dateneinausgabeeinrichtung (2) begrenzt wird.

7. Verfahren nach Anspruch 1 bis 6,
**dadurch gekennzeichnet**, daß jedes Bit der Response zur Datenein/ausgabeeinheit gesendet wird, bevor das nächste Responsebit berechnet wird.

8. Verfahren nach Anspruch 1,
**dadurch gekennzeichnet,**
daß die aktuelle Anzahl der noch nicht verbrauchten Zahleinheiten des Freigabezählers als Maßgabe zur Erzeugung einer Datensendung ("Challenge") von der Datenein-/ausgabeeinheit (2) zur Datenträgeranordnung (1) vorgesehen wird.

9. Verfahren nach einem der Ansprüche 2 bis 8,
**dadurch gekennzeichnet,**
daß eine Datensendung ("Response") von der Datenträgeranordnung (1) zur Datenein-/ausgabeeinheit erst nach Ablauf einer vorgegebenen Anzahl von Takten gesendet wird.

10. Verfahren nach einem der Ansprüche 1 bis 9,
**dadurch gekennzeichnet**,
daß die Datentrageranordnung (1) und/oder Datenein-/ausgabeeinrichtung (2) neben einem Datenaustausch zur Echtheitserkennung auch zusätzliche für die eigentliche Echtheitserkennung unnötige Daten austauscht,um ein Erkennen der zur eigentlichen Echtheitserkennung notwendigen Daten zu erschweren.

11. Verfahren nach einem der Ansprüche 1 bis 10,
**dadurch gekennzeichnet,**
daß nach einem Einschreiben von Daten in einen vorgegebenen Teilbereich des nichtflüchtigen Speichers (4) eine Datensendung ("Response") von der Datenträgeranordnung (1) zur Datenein-/ausgabeeinheit (2) erfolgt.

12. Verfahren nach einem der Ansprüche 1 bis 11,
**dadurch gekennzeichnet,**
daß das Rücksetzen des Fehlerzählers erst nach einem Entwerten einer vorbestimmten Anzahl von im Wertebereich des nichtflüchtigen Speichers befindlichen Wertebits erfolgt.

13. Verfahren nach einem der Ansprüche 1 bis 12,
**dadurch gekennzeichnet,**
daß eine Datensendung ("Response") von der Datenträgeranordnung (1) zur Datenein-/ausgabeeinrichtung (2) mittels eines eine rückgekoppelte Schieberegistereinrichtung enthaltenen digitalen Rechenwerkes durchgeführt wird.

14. Verfahren nach Anspruch 13,
**dadurch gekennzeichnet,**
daß das digitale Rechenwerk eine nichtlineare Funktion realisiert, die die Ausgabe der Datensendung ("Response") von der Datenträgeranordnung (1) zur Datenein-/ausgabeeinheit (2) beeinflußt.

15. Datenträgeranordnung (1) zur Durchführung eines Verfahrens nach einem der Ansprüche 1 bis 14 mit einer einen nichtflüchtigen Speicher (4) zum Speichern einer aktuellen Anzahl von Werteinheiten und dessen Steuer- und Adressierschaltung bildenden integrierten Schaltungsanordnungen, wobei mittels einer Datenein-/ausgabeeinrichtung (2) Daten zur Echtheitserkennung aus der Datenträgeranordnung (1) lesbar bzw. in diese einschreibbar sind,
**dadurch gekennzeichnet,**
daß ein Freigabezähler (9) vorgesehen ist, der erhöht oder erniedrigt wird, bevor ein Datenaustausch zur Echtheitserkennung freigebbar ist, daß die Datenträgeranordnung (1) eine Koppeleinrichtung (7) aufweist, um das Lesen von Daten aus bzw. Einschreiben von Daten in die Datenträgeranordnung (1) nur so lange zu ermöglichen, wie der Zählstand des Freigabezählers in einem vorbestimmten gültigen Bereich liegt, und daß über eine Blockiereinrichtung (8) ein Datenaustausch zwischen Datenträgeranordnung (1) und Datenein/ausgabeeinrichtung (2) bei Überschreiten dieses Bereiches unterbrechbar ist.

16. Datenträgeranordnung nach Anspruch 15,
**dadurch gekennzeichnet,**
daß die Koppeleinrichtung (7) der Datenträgeranordnung (1) ein digitales Rechenwerk mit einer rückgekoppelten Schieberegistereinrichtung aufweist, und daß die rückgekoppelte Schieberegistereinrichtung mit einem der aktuellen Anzahl der noch nicht verbrauchten Werteinheiten zugeordneten Informationssignal zur Erzeugung einer Pseudozufallsfolge vorgesehen ist.

17. Datenträgeranordnung nach Anspruch 15 oder 16,
**dadurch gekennzeichnet,**
daß das digitale Rechenwerk als integrierte Schaltung ausgeführt ist und über eine Fotomaskenanordnung so verschaltet ist, daß elektrische Leitungsverbindungen optisch nicht sichtbar durch Dotierungsprozesse hergestellt sind.

18. Datenträgeranordnung nach einem der Ansprüche 15 bis 17,
**dadurch gekennzeichnet**,
daß die integrierte Schaltung mit zusätzlichen Schaltungselementen versehen ist, die für die eigentliche integrierte Schaltung nicht gebraucht werden.

19. Datenträgeranordnung nach einem der Ansprüche 15 bis 18,
**dadurch gekennzeichnet,**
daß mindestens das digitale Rechenwerk in der integrierten Schaltung mit Schichten aus Metall- und/oder Silizium geschützt gegen optische Analyse und gegen Messung elektrischer Potentiale abgedeckt ausgebildet ist.

20. Datenträgeranordnung nach einem der Ansprüche 15 bis 19,
**dadurch gekennzeichnet,**
daß in der Datenein-/ausgabeeinrichtung (2) Mittel vorgesehen sind, Vergleichswerte zur Information der von der Datenträgeranordnung gesendeten Datensendung ("Response") zu berechnen, und daß durch diese Mittel eine langsamere Berechnung in der Datenträgeranordnung (1) ermöglicht ist und die "Response" des Datenträgers in der Datenein-/ausgabeeinrichtung bis zum Datenverleich zwischenspeicher ist.

21. Datenträgeranordnung nach einem der Ansprüche 15 bis 20,
**dadurch gekennzeichnet,**
daß die Datenträgeranordnung eine tragbare Datenträgeranordnung, insbesondere eine Chipkarte ist.

## Claims

1. Method for detecting the authenticity of a data medium arrangement (1) belonging to a data exchange system and equipped with a limited number of value units, which data medium arrangement exhibits an integrated circuit forming a non-volatile memory (4) for storing a current number of value units of the data medium arrangement (1) and its control and addressing circuit, wherein data for authenticity detection from the data medium arrangement (1) can be exchanged with a data input/output device (2) in the data exchange system, characterized in that a data exchange for authenticity detection is only enabled after an enable counter has been incremented or decremented, and in that the enable counter is only cleared in the case of a reduction of the value units.

2. Method according to Claim 1, characterized in that the current number of units of the enable counter which have not yet been used up is provided as a measure for generating a data transmission ("response") from the data medium arrangement (1) to the data input/output device (2).

3. Method according to Claim 2, characterized in that, with a change in the current number of value units and the counting units in the enable counter, an information content of the data transmission also changes.

4. Method according to one of Claims 1 to 3, characterized in that a data transmission ("response") of the data medium arrangement (1), to the data input/output unit (2) only takes place after the data input/output device (2) has transmitted a predetermined number of clock pulses to the portable data medium arrangement (1).

5. Method according to one of Claims 1 to 4, characterized in that the data transmission ("response") from the data medium arrangement (1) to the data input/output unit (2) is limited to a predetermined number of clock pulses of the data input/output device (2).

6. Method according to one of Claims 1 to 4, characterized in that each bit of the response is limited to a predetermined number of clock pulses of the data input/output device (2).

7. Method according to Claim 1 to 6, characterized in that each bit of the response is transmitted to the data input/output unit before the next response bit is calculated.

8. Method according to Claim 1, characterized in that the current number of counting units of the enable counter which have not yet been used up is provided as a measure for generating a data transmission ("challenge") from the data input/output unit (2) to the data medium arrangement (1).

9. Method according to one of Claims 2 to 8, characterized in that a data transmission ("response") from the data medium arrangement (1) to the data input/output unit is only transmitted after a predetermined number of clock pulses has elapsed.

10. Method according to one of Claims 1 to 9, characterized in that the data medium arrangement (1) and/or data input/output device (2) also exchanges, in addition to a data exchange for authenticity detection, additional data unnecessary for the authenticity detection per se in order to make it more difficult to detect the data needed for an authenticity detection per se.

11. Method according to one of Claims 1 to 10, characterized in that, after data has been written into a predetermined part-area of the non-volatile memory (4), a data transmission ("response") from the data medium arrangement (1) to the data input/output unit (2) takes place.

12. Method according to one of Claims 1 to 11, characterized in that the error counter is only reset after a devaluation of a predetermined number of value bits located in the value area of the non-volatile memory.

13. Method according to one of Claims 1 to 12, characterized in that a data transmission ("response") from the data medium arrangement (1) to the data input/output device (2) is carried out by means of a digital arithmetic-logic unit containing a shift register device with feedback.

14. Method according to Claim 13, characterized in that the digital arithmetic-logic unit implements a non-linear function which influences the output of the data transmission ("response") from the data medium arrangement (1) to the data input/output unit (2).

15. Data medium arrangement (1) for carrying out a method according to one of Claims 1 to 14, comprising an integrated circuit arrangement forming a non-volatile memory (4) for storing a current number of value units and its control and addressing circuit, wherein data can be read out of the data medium arrangement (1) or written into the latter for the purpose of authenticity detection by means of a data input/output device (2), characterized in that an enable counter (9) is provided which is incremented or decremented before a data exchange for authenticity detection can be enabled, in that the data medium arrangement (1) exhibits a coupling device (7) in order to enable data to be read out of or data to be written into the data medium arrangement (1) only for as long as the count of the enable counter is within a predetermined valid range, and in that a data exchange between data medium arrangement (1) and data input/output device (2) can be interrupted via a blocking device (8) if this range is exceeded.

16. Data medium arrangement according to Claim 15, characterized in that the coupling device (7) of the data medium arrangement (1) exhibits a digital arithmetic-logic unit comprising a shift register device with feedback, and in that the shift register device with feedback is provided with an information signal allocated to the current number of value units not yet used up for generating a pseudo-random sequence.

17. Data medium arrangement according to Claim 15 or 16, characterized in that the digital arithmetic-logic unit is constructed as integrated circuit and is interconnected via a photomask arrangement in such a manner that electrical line connections are made in an optically invisible manner by means of doping processes.

18. Data medium arrangement according to one of Claims 15 to 17, characterized in that the integrated circuit is provided with additional circuit elements which are not needed for the actual integrated circuit.

19. Data medium arrangement according to one of Claims 15 to 18, characterized in that at least the digital arithmetic-logic unit in the integrated circuit is constructed to be protected against optical analysis and against measurement of electrical potentials by being covered with layers of metal and/or silicon.

20. Data medium arrangement according to one of Claims 15 to 19, characterized in that in the data input/output device (2), means are provided for calculating reference values for information of the data transmission ("response") transmitted by the data medium arrangement, and in that these means provide for a slower calculation in the data medium arrangement (1), and the "response" of the data medium can be temporarily stored in the data input/output device until the time of the data comparison.

21. Data medium arrangement according to one of Claims 15 to 20, characterized in that the data medium arrangement is a portable data medium arrangement and especially a chip card.

## Revendications

1. Procédé pour l'authentification d'un dispositif de support de données (1) appartenant à un système d'échange de données et doté d'un nombre limité d'unités de valeur, qui comporte un circuit intégré formant une mémoire non volatile (4) pour stocker un nombre actuel d'unités de valeur du dispositif de support de données (1) et le circuit de commande et d'adressage de celle-ci, dans le système d'échange de données étant échangeables avec un dispositif d'entrée/sortie de données (2) des données pour l'authentification provenant du dispositif de support de données (1), caractérisé en ce qu'un échange de données pour l'authentification n'est autorisé qu'après avoir augmenté ou diminué un compteur d'autorisation et en ce que le compteur d'autorisation n'est effacé que lorsque les unités de valeur baissent.

2. Procédé selon la revendication 1, caractérisé en ce que le nombre actuel d'unités non encore consommées du compteur sert de critère pour générer un envoi de données ("response") du dispositif de support de données (1) au dispositif d'entrée/sortie de données (2).

3. Procédé selon la revendication 2, caractérisé en ce qu'un contenu d'information de l'envoi de données change lui aussi lorsque le nombre actuel d'unités de valeur et d'unités de comptage dans le compteur d'autorisation change.

4. Procédé selon l'une des revendications 1 à 3, caractérisé en ce qu'un envoi de données ("response") du dispositif de support de données (1) à l'unité d'entrée/sortie de données (2) n'a lieu qu'une fois que le dispositif d'entrée/sortie de données (2) a envoyé un nombre prédéterminé d'impulsions de rythme au dispositif de support de données (1).

5. Procédé selon l'une des revendications 1 à 4, caractérisé en ce que l'envoi de données ("response") du dispositif de support de données (1) à l'unité d'entrée/sortie de données (2) est limité à un nombre prédéterminé de rythmes du dispositif d'entrée/sortie de données (2).

6. Procédé selon l'une des revendications 1 à 4, caractérisé en ce que chaque bit de la "response" est limité à un nombre prédéterminé de rythmes du dispositif d'entrée/sortie de données (2).

7. Procédé selon la revendication 1 à 6, caractérisé en ce que chaque bit de la "response" est envoyé à l'unité d'entrée/sortie de données avant de calculer le bit de "response" suivant.

8. Procédé selon la revendication 1, caractérisé en ce que le nombre actuel d'unités de comptage non encore consommées du compteur d'autorisation sert de critère pour générer un envoi de données ("challenge") de l'unité d'entrée/sortie de données (2) au dispositif de support de données (1).

9. Procédé selon l'une des revendications 2 à 8, caractérisé en ce qu'un envoi de données ("response") du dispositif de support de données (1) à l'unité d'entrée/sortie de données (2) n'a lieu qu'après un nombre prédéterminé de rythmes.

10. Procédé selon l'une des revendications 1 à 9, caractérisé en ce que le dispositif de support de données (1) et/ou le dispositif d'entrée/sortie de données (2) échange outre des données pour l'authentification également des données auxiliaires inutiles pour l'authentification proprement dite, pour rendre plus difficile une identification des données nécessaires à l'authentification proprement dite.

11. Procédé selon l'une des revendications 1 à 10, caractérisé en ce qu'après une introduction de données dans une sous-zone prédéterminée de la mémoire non volatile (4), un envoi de données ("response") du dispositif de support de données (1) à l'unité d'entrée/sortie de données (2) a lieu.

12. Procédé selon l'une des revendications 1 à 11, caractérisé en ce que la remise à zéro du compteur d'erreurs n'a lieu qu'après une dévalorisation d'un nombre prédéterminé de bits de valeurs présents dans le champ de valeurs de la mémoire non volatile.

13. Procédé selon l'une des revendications 1 à 12, caractérisé en ce qu'un envoi de données ("response") du dispositif de support de données (1) au dispositif d'entrée/sortie de données (2) est effectué au moyen d'un organe de calcul numérique contenant un dispositif de registre de décalage à réaction.

14. Procédé selon la revendication 13, caractérisé en ce que l'organe de calcul numérique réalise une fonction non linéaire qui influence la sortie de l'envoi de données ("response") du dispositif de support de données (1) à l'unité d'entrée/sortie de données (2).

15. Dispositif de support de données (1) pour la mise en oeuvre d'un procédé selon l'une des revendications 1 à 14, comportant un circuit intégré formant une mémoire non volatile (4) pour stocker un nombre actuel d'unités de valeur et le circuit de commande et d'adressage de celle-ci, au moyen d'un dispositif d'entrée/sortie de données (2) des données pour l'authentification pouvant être extraites du dispositif de support de données (1) ou introduites dans celui-ci, caractérisé en ce qu'un compteur d'autorisation (9) est prévu, qui est augmenté ou diminué avant qu'un échange de données pour l'authentification puisse être autorisé, en ce que le dispositif de support de données (1) comporte un dispositif de couplage (7) pour ne permettre l'extraction de données du dispositif de support de données (1) ou l'introduction de données dans celui-ci qu'aussi longtemps que l'état du compteur d'autorisation se situe dans une zone valide prédéterminée et en ce que via un dispositif de blocage (8), un échange de données entre dispositif de support de données (1) et dispositif d'entrée/sortie de données (2) peut être interrompu, lorsque cette zone est dépassée.

16. Dispositif de support de données selon la revendication 15, caractérisé en ce que le dispositif de couplage (7) du dispositif de support de données (1) comporte un organe de calcul numérique doté d'un dispositif de registre de décalage à réaction et en ce que le dispositif de registre de décalage à réaction est prévu avec un signal d'information attribué au nombre actuel d'unités de valeur non encore consommées pour générer une séquence pseudo-aléatoire.

17. Dispositif de support de données selon la revendication 15 ou 16, caractérisé en ce que l'organe de calcul numérique est réalisé sous forme de circuit intégré et monté par un dispositif de photomasques de manière à obtenir des connexions optiquement invisibles par des processus de dopage.

18. Dispositif de support de données selon l'une des revendications 15 à 17, caractérisé en ce que le circuit intégré est pourvu d'éléments de circuit auxiliaires qui ne sont pas utilisés pour le circuit intégré proprement dit.

19. Dispositif de support de données selon l'une des revendications 15 à 18, caractérisé en ce qu'au moins l'organe de calcul numérique dans le circuit intégré est revêtu de couches de métal et/ou de silicium de manière à être protégé contre l'analyse optique et contre la mesure de potentiels électriques.

20. Dispositif de support de données selon l'une des revendications 15 à 19, caractérisé en ce que le dispositif d'entrée/sortie de données (2) comprend des moyens permettant de calculer des valeurs de comparaison pour l'information de l'envoi de données ("response") effectué par le dispositif de support de données et en ce que ces moyens permettent un calcul plus lent dans le dispositif de support de données (1) et que la "response" du support de données peut être stockée provisoirement dans le dispositif d'entrée/sortie de données jusqu'à la comparaison des données.

21. Dispositif de support de données selon l'une des revendications 15 à 20, caractérisé en ce que le dispositif de support de données est un dispositif de support de données portable, en particulier une carte à puce.
